# EUROPEAN PATENT SPECIFICATION

(11) **EP 2 210 751 B1**
(45) Date of publication and mention of the grant of the patent: **09.04.2014**
(21) Application number: 08846979.6
(22) Date of filing: 30.10.2008
(51) Int. Cl.: B60H 1/24, B60H 1/32, B60H 1/00

(54) **ON-VEHICLE TEMPERATURE CONTROLLER**
TEMPERATURSTEUERUNG AN BORD EINES FAHRZEUGES
RÉGULATEUR DE TEMPÉRATURE EMBARQUÉ

(30) Priority: 08.11.2007 JP 2007290742; 08.09.2008 JP 2008229394
(43) Date of publication of application: 28.07.2010
(73) Proprietor: Kabushiki Kaisha Toshiba, Minato-ku Tokyo 105-8001 (JP); Toshiba Consumer Electronics Holdings Corporation, Tokyo 101-0021 (JP); Toshiba Home Appliances Corporation, Tokyo 101-0021 (JP)
(72) Inventor: ADACHI, Kosaku, Tokyo 105-8001 (JP); SAKAMOTO, Noriaki, Tokyo 105-8001 (JP); OZAKI, Tatsuya, Tokyo 1058001 (JP); OCHIAI, Koichiro, Tokyo 105-8001 (JP); EMURA, Yuji, Osaka 532-0012 (JP); ISHIKAWA, Hiroya, Osaka 532-0012 (JP); NAKATA, Takayuki, Osaka 532-0012 (JP)
(74) Representative: Wallace, Sheila Jane
(86) International application number: PCT/JP2008/069788
(87) International publication number: WO 2009/060786

(56) References cited:
- EP-A1- 1 362 723
- JP-A- 7 025 225
- JP-A- 11 165 533
- JP-A- 2001 150 920
- JP-U- 2 112 155
- JP-U- 3 123 729
- JP-U- 4 011 714
- JP-U- 6 023 831
- US-A- 1 475 912
- US-A1- 2001 032 476
- US-A1- 2005 087 332

## Description

### Technical Field

The present invention relates to a vehicle-mounted temperature control device which is installed in a cabin for a nap, etc. in a cab of a truck to blow off cooled or warmed air.

### Background Art

Conventionally, in a cab of an automobile, such as a truck, a bunk for getting sleep is provided in a cabin so that rest or sleep in a recumbent position can be obtained in this cabin for a nap in the case of long-distance transport, etc. When getting sleep, temperature and humidity conditions change depending on seasons or areas. Therefore, control has been performed by using thick bedding with high heat insulation performance or by using thin bedding with high moisture absorbency. Moreover, on high-temperature and high-humidity sultry nights in summer, a car air-conditioner is operated to control the air in the cab to secure comfortable sleep.

In the above methods, year-round adjustment of the bedding is complicated, power consumption becomes large in air conditioning the whole cab by the operation of a car air-conditioner, and an idling operation is needed. These have a great influence on global warming accompanying not only power consumption but discharge of large amounts of carbon dioxide gas.

For this reason, the idling stop of an automobile has in recent years been called for as an available measure for the reduction of carbon dioxide gas. As a cooling device to cope with idling stops, a refrigerant is cooled during operation, and cooling is performed by the refrigerant after an engine stop. However, since humidity increases due to frosting in methods using the refrigerant, a comfortable atmosphere cannot be obtained. As other measures, practically, visible accomplishments have not appeared, but a great environmental problem is caused.

Meanwhile, as shown in FIG. 12, Patent Document 1 discloses a configuration in which the air from an air conditioner (51) which has a heat exchanger (65) and a blower(70) is circulated into a sleeping bag (56) in which a space (54) where a human being (A) lies is formed so that the inside of the space is cooled, and thereby, the refrigerating machine itself is operated with a small amount of electric power so that environment pollution and waste of energy resources are suppressed.

Additionally, Patent Document 2 shown in FIG. 13 discloses the structure of an air circulation type mat (71) in which a heat exchanger is provided at one longitudinal end of a mat (76) which extends flatly and horizontally so as to supply heat-exchange air, and the supplied air flows through a breathable mat (77) so that a comfortable feeling for a human being (A) is obtained.
[Patent Document 1] JP-A-2007-098044
[Patent Document 2] JP-A-2007-105084

### Disclosure of the Invention

### Problems that the Invention is to Solve

However, when the sleeping bag described in Patent Document 1, or the mat device described in Patent Document 2 is installed in a vehicle body of a truck, etc., there are a number of problems to be solved in that an air-conditioner along with the sleeping bag or the mat should be installed in a narrow cabin space, the installation configuration or installation operation becomes extremely difficult, and the processing of exhaust air or frosted water, or a configuration which prevents entry of noise or heat from the outside are needed.

US 2005/0087332A discloses a vehicle-mounted temperature control device comprising: a refrigeration unit having a refrigeration cycle in which a compressor, a condenser, and an evaporator to which driving electric power by a battery is supplied are annularly connected; a temperature control chamber formed from a heat-insulating wall body having a blowoff air trunk and a return air trunk and having a circulation fan and the evaporator in the refrigeration cycle housed therein; and a machine chamber in which the compressor, the condenser, and a radiation fan which cools the compressor and condenser are disposed, and the cool air or warm air generated by the evaporator being blown off to either the driver's seat or the inside of the napping cabin, or both so that temperature is controlled.

The invention was made in consideration of the above circumstances, and the invention can provide a vehicle-mounted temperature control device capable of suppressing resource wasting or environmental contamination by an idling stop, an easily installed vehicle-mounted refrigeration unit which blows off cooled or warmed air to the inside of a vehicle, and selectively cooling or warming not only a napping cabin behind the driver's seat, but also the driver's seat.

### Means for Solving the Problems

The invention is the vehicle of claim 1.

### Advantage of the Invention

According to the invention, comfortable sleep can be obtained in a state where the engine is turned off during napping, and not only the rear cabin but also the driver's seat can be selectively cooled or warmed. If a human being takes a short rest or short nap, he/she does not need to move into the rear cabin, and can easily obtain a comfortable surroundings even in the driver's seat.

### Best Mode for Carrying out the Invention

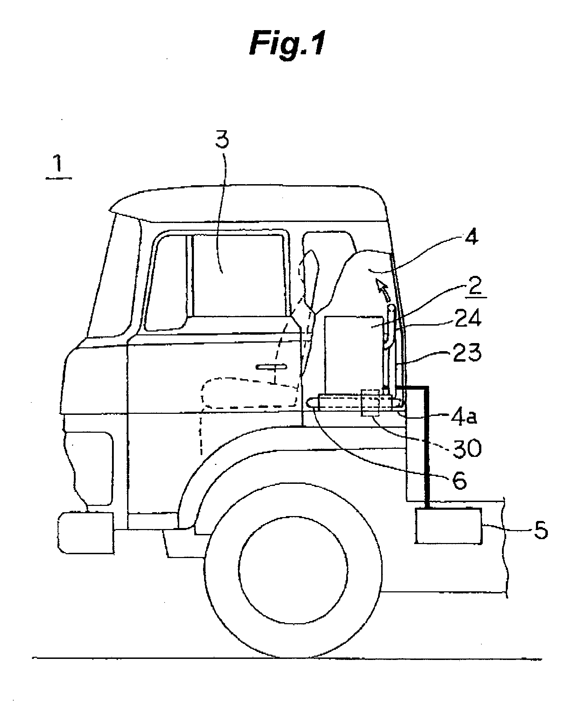

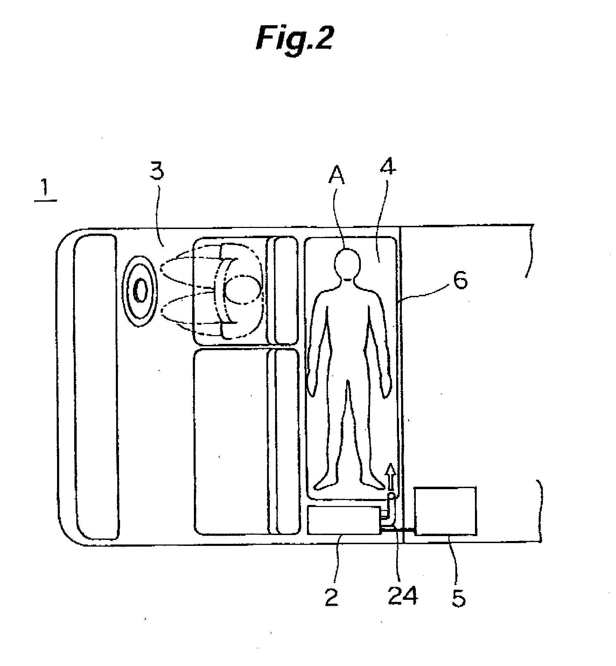

One embodiment of the invention will now be described with reference to the drawings. FIG. 1 is a side view of a front part of a truck on which a vehicle-mounted temperature control device (1) of the invention is mounted, and FIG. 2 is a plan view thereof. The vehicle-mounted temperature control device (1) is formed from a refrigeration unit (2) installed in a rear cabin (4) of a driver's seat (3) used as a napping room, and a battery (5) which drives the refrigeration unit (2).

In the rear cabin (4), the refrigeration unit (2) is disposed along an outer wall at a rear position on the front passenger side, and a mat (6) on which a user (A) lies is installed so that the width direction of the vehicle body becomes the longitudinal direction with respect to the refrigeration unit (2).

The battery (5) is exclusively provided as a driving power source of the refrigeration unit (2) separately from a battery for the truck, is charged during the driving of the automobile engine, and is disposed at a lower portion of the vehicle body outside the rear cabin (4).

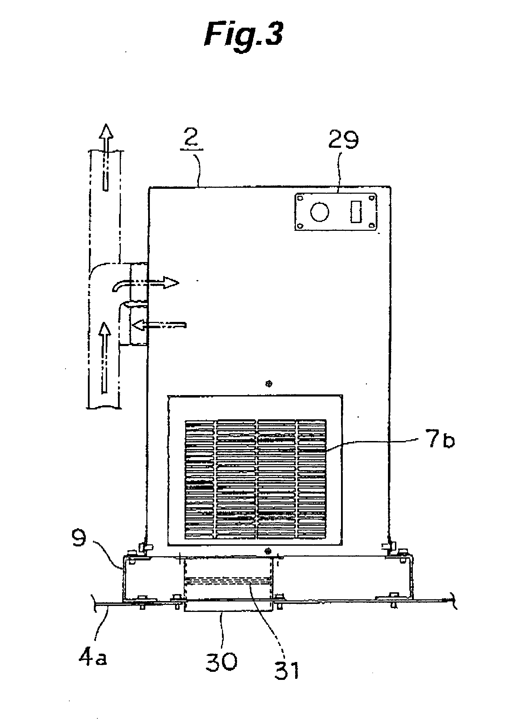

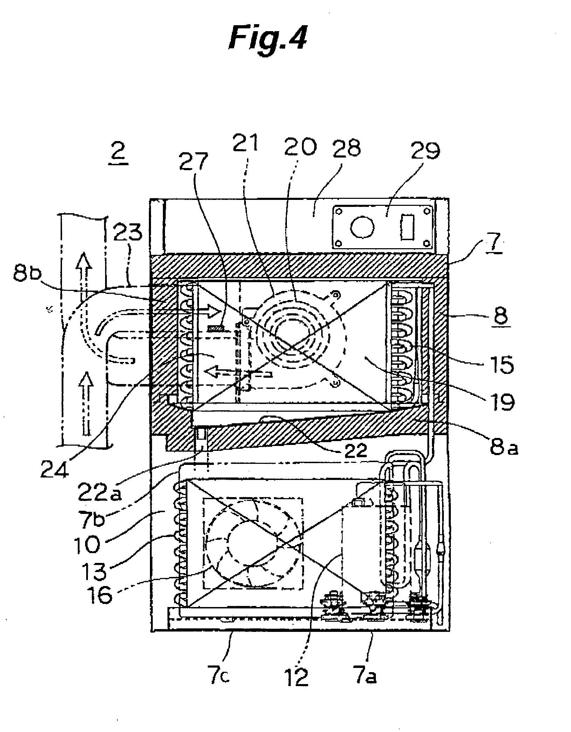

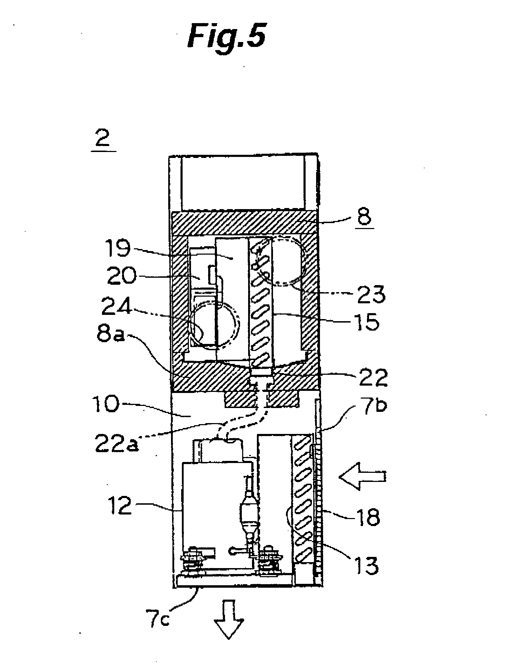

As shown in FIG. 3 which is a front view, FIG. 4 showing the front face of FIG. 3 removed, and FIG. 5 which is a side sectional view of FIG. 3, the refrigeration unit (2) forms a box-like outer shell by an outer plate (7) made from a thin steel sheet, is partitioned into upper and lower spaces substantially at a central portion in the height direction by a heat-insulating partition wall (8a), and is bolt-fixed to an upper portion of a vehicle body bottom plate (4a) which is the floor surface of the rear cabin (4) via a mount (9).

A compressor (12) which compresses and discharges refrigerant which forms part of a refrigeration cycle (11), a condenser (13) which receives, radiates, and condenses the discharged high-temperature and high-pressure refrigerant, and a radiation fan (16) which cools high-temperature components, such as the compressor (12) and the condenser (13), are installed on a bottom plate (7a), which is a rigid body which forms a bottom portion of the outer plate (7), thereby forming a machine chamber (10).

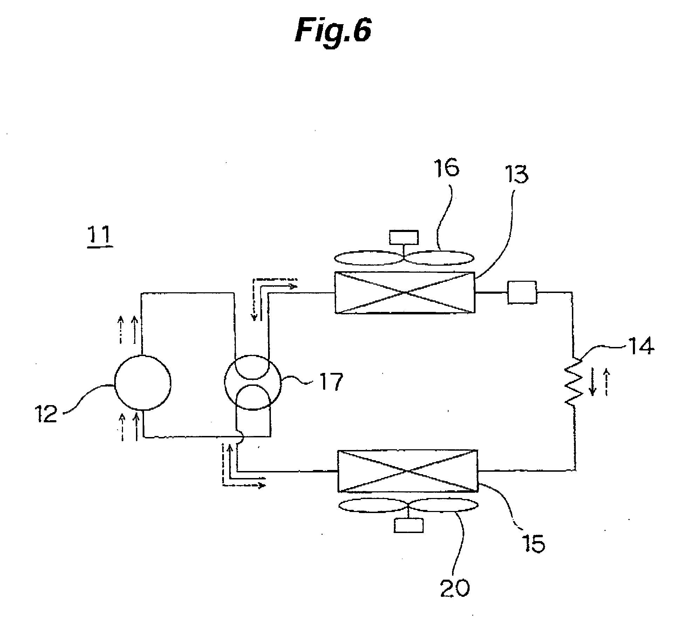

As shown in FIG. 6, the refrigeration cycle (11) is of a vapor compression type in which the compressor (12), the condenser (13), a capillary (14) which is a decompressor, and an evaporator (15) are annularly connected, and the evaporator (15) is made to function as a heat exchanger capable of switching cooing and heating by providing a four-way valve (17) so as to connect together the upstream and downstream of the compressor (12), thereby switching refrigerant flow passages, and in which refrigerant is circulated by driving the compressor (12) by the battery (5) and is evaporated in the evaporator (15) to generate cool air, or the refrigerant flow passages are switched by the four-way valve (17), and a condensation action is caused in the evaporator (15) to make the evaporator (15) function as a high-temperature-side heat exchanger to generate warm air.

The compressor (12) which is a heavy load in the machine chamber (10) is biased toward one side in a width direction on the bottom plate (7a), and is fixed via vibration-absorbing cushion bodies. The rectangular parallelepiped-shaped condenser (13) in which a serpentine refrigerant pipe is fitted into a number of fins and the depth dimension is made small, is erected along a suction opening (7b) in which the front face of the condenser having a large area is formed on the front face of the outer plate (7), and a filter (18) is provided between the suction opening (7b) and the condenser (13) so as to shield from dust, etc.

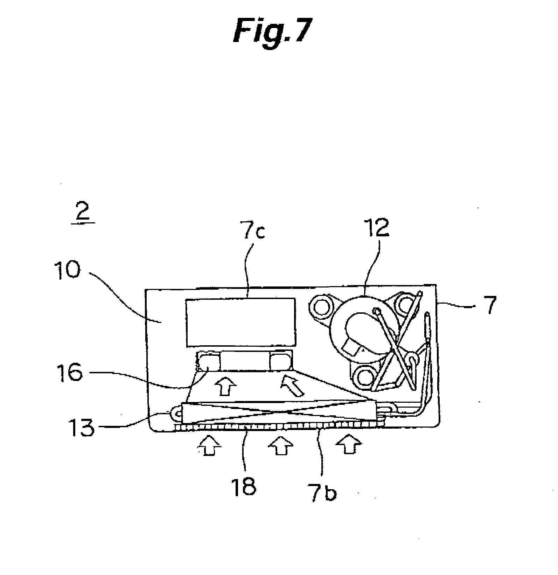

As shown in FIG. 7 which is a plan view of a machine chamber (10), the radiation fan (16) including an axial flow fan is arranged on the back face of the condenser (13). When a cooling operation is performed, the compressor (12) and the radiation fan (16) are synchronously driven, and ambient air is sucked into the inside from the suction opening (7b) to cool the condenser (13) which has a high temperature, and the air which has performed heat exchange is radiated to the outside of the unit from an exhaust port (7c) formed in the bottom face of the outer plate (7). At this time, since the compressor (12) is positioned at a side portion in the machine chamber (10), and the compressor hardly receives a cooling action directly by the radiation fan (16), a drop in evaporation temperature caused by supercooling is prevented. Further, the depth dimension of the machine chamber (10) is shortened by arranging the compressor (12) and the radiation fan (16) so as not to overlap each other in the depth direction by a biased distance.

An upper space from the heat-insulating partition wall (8a) is used as a temperature control chamber (19) which generates cooled air or warmed air as a heat-insulating space in which a whole peripheral wall including a top face is formed by the heat-insulating wall (8), such as styrene foam. The evaporator (15) which is a portion of the refrigeration cycle (11) and which receives the refrigerant from the condenser (13) to evaporate the refrigerant during the cooling operation, thereby lowering the temperature of the refrigerant to generate cool air, is arranged in an erected state substantially in the central portion of the space.

Similarly to the condenser (13), the evaporator (15) also assumes a rectangular parallelepiped shape in which the depth dimension is made small from a serpentine refrigerant pipe and a number of fins fitted into the refrigerant pipe. At the back of the evaporator, the blower fan (20) including a sirocco fan which has a diameter narrower than the width dimension of the evaporator (15), and a casing (21) are erected abreast of the evaporator (15) at a flat surface portion of the heat-insulating partition wall (8a).

The top face of the heat-insulating partition wall (8a) on which the evaporator (15) is placed forms a gutter portion (22) which is inclined downward toward one side, and receives melting water of the frost adhering to the evaporator (15) the temperature of which has become a low temperature, and the water collected in the gutter portion (22) is guided to a drain pipe (22a) and drained to the outside via the inside of the lower machine chamber (10) from the exhaust port (7c).

A return air trunk (23), which sucks the air in the rear cabin (4) which is an object to be temperature-controlled into the temperature control chamber (19), is opened to an upper wall portion which is positioned slightly ahead of the erected position of the evaporator (15) in the heat-insulating side wall (8b) which forms one side wall of the temperature control chamber (19), and a blowoff air trunk (24) which blows off cool air to the rear cabin (4) is opened from the casing (21) of the blower fan (20).

A temperature sensor (27) is disposed at a portion of the return air trunk (23). The temperature sensor (27) detects the air temperature which has flowed and returned through the rear cabin (4), and controls the operation of the compressor (12) in the refrigeration unit (2) so as to supply the air cooled or warmed to a user's desired temperature into rear cabin (4), and detects load fluctuations caused by heat leakage with the ambient air, thereby controlling the inside of the rear cabin (4) in an always comfortable temperature state.

Additionally, an upper portion of the heat-insulating wall (8) of the top face of the temperature control chamber (19) is used as an electrical component housing portion (28), such as a board, and a control panel (29) is arranged at the front face of the temperature control chamber so as to control the operation of the refrigeration unit (2). For example, when a cooling operation is performed, the temperature control is made along with a high-capability and high-efficiency cooling operation by performing circulation such that temperature-controlled cool air is generated by controlling flow passages by the four-way valve (17) of the refrigeration cycle (11) in the refrigeration unit (2) so that the refrigerant from the compressor (12) is discharged to the condenser (13) and is evaporated in the evaporator (15), and this cool air is sent into the rear cabin (4) from the blowoff air trunk (24) by the blower fan (20), cools the napping space, and returns to the evaporator (15) in the temperature control chamber (19) via the return air trunk (23). Additionally, in the case of a warming operation, the temperature of air is made high by switching the evaporator (15) to the condensation side by the four-way valve (17), and circulation air is warmed by heat exchange so as to be blown off toward the rear cabin (4).

The napping space can obtain the temperature control effects for both cooling and warming by the employment of the four-way valve (17). However, when only the cooling action is used, a refrigeration cycle from which the four-way valve (17) is removed may be employed.

The refrigeration unit (2) configured as described above is bolt-fixed to the vehicle body bottom plate (4a) via the mount (9) as above. An opening is bored in the bottom plate (4a) of the vehicle body which faces the exhaust port (7c) formed at the bottom of the refrigeration unit (2), and a prismatic exhaust duct (30) is installed over this opening and the exhaust port (7c), and the lower portion of the exhaust duct (30) is fitted into the opening of the vehicle body bottom plate (4a) and is fixed so as to protrude downward from the bottom face of the vehicle body bottom plate (4a) by a predetermined dimension.

Since the exhaust duct (30) is installed between the mount (9) and the vehicle body bottom plate (4a), the exhaust air from the machine chamber (10) can be discharged to the outside of a vehicle by the shortest distance, and the cabin space can be more efficiently utilized without requiring a separate space for the exhaust duct (30).

In addition, a damper (31) which opens and closes a vertical communication passage is provided at the center of the inside of the exhaust duct (30). The damper (31) opens or closes a communication passage in the exhaust duct (30) by a rotational operation. When the refrigeration unit (2) has been driven, the damper is rotated by manual operation, or electrically according to the button operation of the control panel (29), to open the communication passage automatically so that the air of the upper machine chamber (10) can be exhausted to the outside of the vehicle. When the refrigeration unit is not driven, the communication passage is closed, so that noise which enters a vehicle from the outside of the vehicle during traveling can be blocked out. Especially when the refrigeration unit (2) is installed in an upper portion, etc. of an engine compartment, the heat-shielding effect can be exhibited.

Through the above configuration, cool air or warm air, which is temperature-controlled by the refrigeration unit (2) driven by the exclusive battery (5), is supplied to the rear cabin (4) on the basis of the user's setting by the control panel (29). Thus, a sleeping space that is always comfortable can be provided even under a variety of used environment conditions. Additionally, the effect that the amount of carbon dioxide gas emitted can also be greatly suppressed by stopping idling is exhibited.

Also, since the exhaust air when the refrigeration unit (2) has been driven can be discharged to the outside of the vehicle, the inside of the vehicle is not filled with heat, the exhaust duct (33) and the refrigeration unit (2) can be easily installed even in the narrow rear cabin (4), and entry of noise, rain, etc. from the outside can also be suppressed.

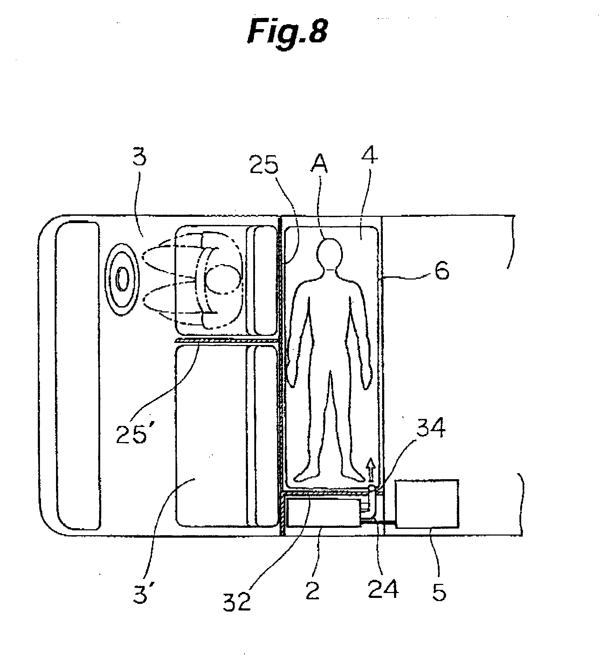

Additionally, the machine chamber (10) of the refrigeration unit (2) rises in temperature due to heat generation of the compressor (12) or condenser (13) during operation. Therefore, when the interior temperature of the rear cabin (4) also rises by heat transfer, and is used by a cooling operation, the cooling effect is inhibited. Thus, in this embodiment, as shown in FIG. 8, the periphery of the refrigeration unit (2) is covered with a heat-insulating shielding curtain (32). The heat transfer is blocked by heat-insulating, demarcating, and partitioning the refrigeration unit (2) and the driver's seat (3) or the portion of the cabin (4) for napping by the shielding curtain (32), so that the napping space can be effectively cooled.

The heat-insulating shielding curtain (32) which is a partition generally also has a sound-insulating effect. In this case, the operation sound during the driving of the refrigeration unit (2) can be insulated, and a more comfortable sleep environment can be obtained.

In addition, as the shielding curtain (32) exists as a partition, the shielding curtain has a certain degree of heat-insulating effect even though the curtain is a thin curtain, and may not have a particularly large heat-insulating power. Additionally, if the shielding curtain is anchored to the inner wall surface of the rear cabin (4) by a surface fastener, etc., the gap can be reduced to raise heat-insulating and sound-insulating effects, the opening/closing or removal operation can also be easily performed.

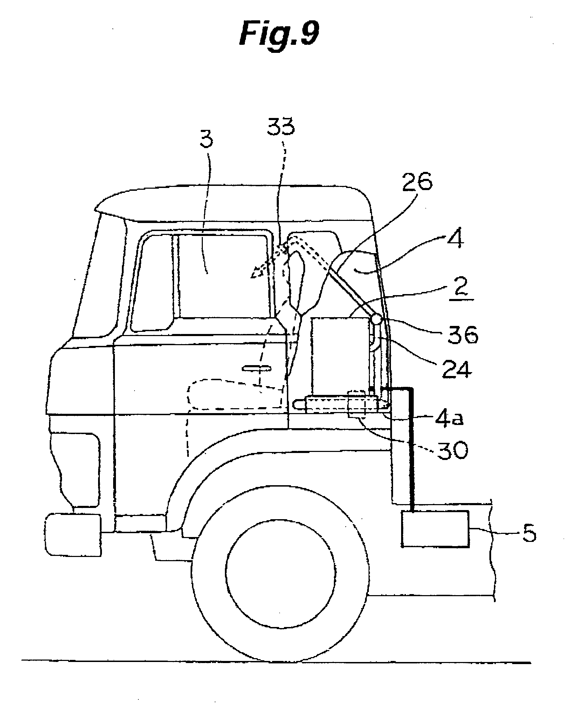

Additionally, as shown in FIG. 9, an extension duct (26) which is an air feed duct which feed cool air or warm air may be connected to the blowoff air trunk (24) from the temperature control chamber (19) of the refrigeration unit (2), and may be made to extend to an upper portion of the driver's seat (3) via a space of a ceiling portion of the rear cabin (4), and a louver (33) which is an air direction adjuster may be provided at an end of the extension duct to change a blowoff direction so that cool air or warm air which has performed heat exchange in the evaporator (15) is supplied to the space of the driver's seat (3).

At this time, the extension duct (26) has a shape which can be flexibly bent, for example is formed from a material in which a spiral core is provided in a tube formed from soft resin or a material having flexibility and heat insulation performance, such as a serpentine tubular body so that the length dimension thereof can be adjusted. Further, a through hole (34) is bored in the shielding curtain (32), and the extension duct (26) is inserted through the through hole and is pulled out into the cabin so that cool air or warm air is blown off to a specific location.

In addition, although the wind direction of the louver (33) may be changed manually, the position of a person may be detected by an infrared sensor, etc., and adjustment may be automatically made so that cool air is sent to a position according to, for example, the angle of reclining.

Additionally, since the rear cabin (4) to which cooled or warmed air is supplied is a comparatively narrow space, if the heat insulation performance of the peripheral wall of the rear cabin are improved, heat leakage decreases. As a result, internal temperature fluctuations can be made small, and cooling or warming effects can be more efficiently obtained with low power consumption. Additionally, as shown in FIG. 8, the space between the rear cabin and the driver's seat (3) may be partitioned by the heat-insulating curtain (25), such as a curtain having high heat insulation performance. In this case, the heat-insulating curtain can serve as part of the shielding curtain (32). If the same heat-insulating curtain (25') is detachably provided between the driver's seat (3) and the passenger seat (3'), the heat insulation performance of the napping space further improves and effective cooling or warming can be performed. In addition, the cooling or warming capability of the whole cabin including the driver's seat (3) is not required, and the power consumption is minimized and economical.

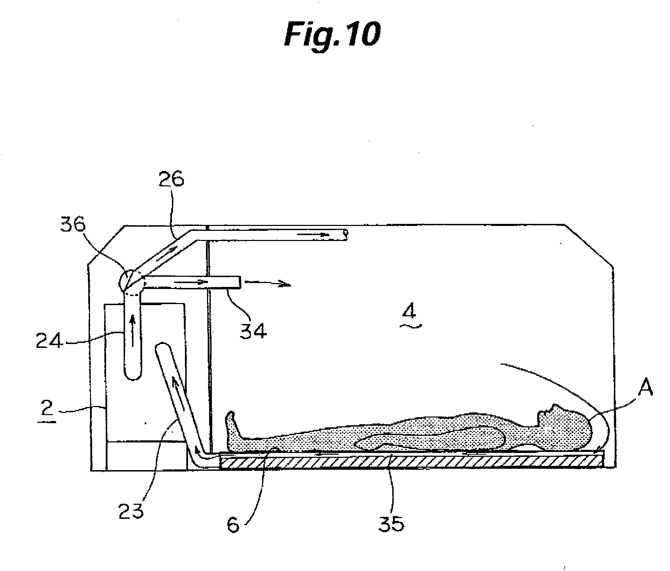

At this time, as shown in FIG. 10, by providing an air feed means separate from the extension duct (26), for example, a second duct (34) which branches from the blowoff air trunk (24) of the temperature control chamber (19) and which has an end opened directly into a rear cabin (4), during the operation of the refrigeration unit (2), the driver's seat (3) can be cooled by the extension duct (26), and the rear cabin (4) can be cooled by the second duct (34). Also, the cool air which has circulated through the inside of the rear cabin (4) may be sucked into the sleeping mat (6) so as to return to the return air trunk (23) while passing through the return duct (35) near the outer surface of the mat (6).

In addition, a branching portion from the blowoff air trunk (24) is provided with a switching damper (36) which is a switching opening/closing means of the air trunk. The switching damper (36) stops a baffle plate at a predetermined position by the rotation of a stepping motor, etc. so that the control of feeding cool air to the air trunk of either the extension duct (26) or the second duct (34), or the air trunks of both the ducts can be easily performed, the blowoff position can thereby be easily changed or selected, and the usability is improved.

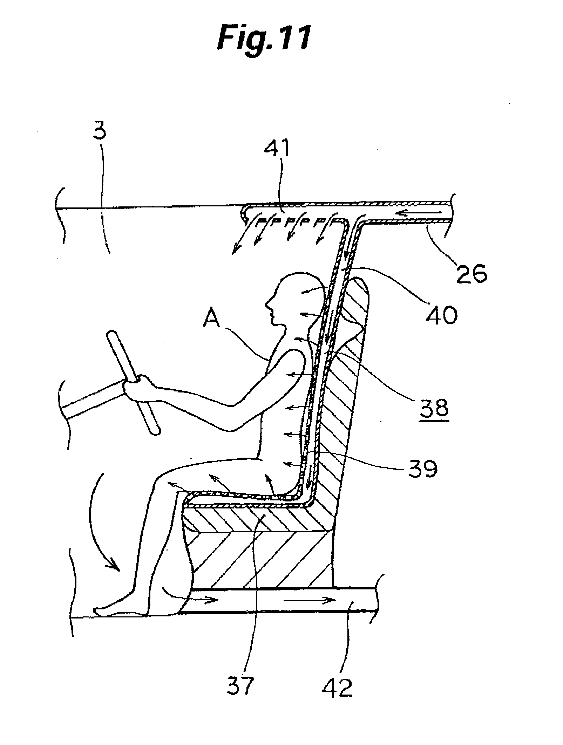

The invention is not limited to the configuration of the above embodiment. It is apparent that the end of an air feed duct, such as the extension duct (26) or the second duct (34), is provided so as to extend and connect to a seating portion (37) of the driver's seat (3) shown in FIG. 11, a seating mat (38) detachably provided at this seating portion, or the sleeping mat (6) for napping provided in the rear cabin (4) shown in FIG. 10. Additionally, although particularly not shown, the air feed duct may be coupled with the blowoff air trunk (24) and the return air trunk (23) of the temperature control chamber (19), ends of both the trunks may be provided so as to extend to air circulation type bedding provided in the rear cabin (4), and the cool air or warm air temperature-controlled by the refrigeration unit (2) is sent to and circulated through the air circulation type bedding so that the inside of the bedding is set to a temperature atmosphere.

Next, an example in which this is adopted as the seating mat (38) of the driver's seat is shown in FIG. 11. If the seating mat (38) is formed so as to have air permeability with an internal ventilating flue (40) even if a person leans, for example, by boring a number of fine through holes (39) at least near the outer surface thereof, and is configured so that the cool air blown off from the extension duct (26) flows so as to pass through the vicinity of the outer surface of the mat (38), and come into contact a human body (A), or is blown off to the driver's seat (3) from a branching air trunk (41) to a ceiling portion, the person can feel the cool air over his/her whole body. When warm air has been supplied, the person can feel warmth from the surroundings so that a still more comfortable environment can be obtained. The cool air which has flowed into the driver's seat (3) is sucked by the return duct (42), and returns to the temperature control chamber (19) from the return air trunk (23).

The above embodiment has been configured to have air permeability near the outer surface of the seating portion (37), the seating mat (38), or the sleeping mat (6), the seat or the mat has only to have air permeability in its internal space, and can be formed from a porous material or fibers, and these mats may be covered with a cover which has air permeability.

Through the above configuration, not only the rear cabin (4) but also the driver's seat (3) and the passenger seat (3') can be selectively cooled or warmed. If a human being takes a short rest or short nap, he/she does not need to move into the rear cabin (4), and can obtain a comfortable atmosphere easily even in the driver's seat (3) in a state where an engine is turned off.

### Brief Description of the Drawings

FIG. 1 is a side view of a truck in which a vehicle-mounted temperature control device of one embodiment of the invention is provided.
FIG. 2 is a plan view of FIG 1.
FIG. 3 is a view showing an installation state from the front of the refrigeration unit in FIG. 1.
FIG. 4 is a front view showing the front face of FIG. 3 removed.
FIG. 5 is a side sectional view of FIG. 4.
FIG. 6 is a schematic configuration view of a refrigeration cycle disposed in FIG. 3.
FIG. 7 is a plan view of a machine chamber in FIG. 4.
FIG. 8 is a plan view of the same portions as those in FIG. 2, showing another embodiment of the invention.
FIG. 9 is a side view of the same portions as those in FIG. 1, showing still another embodiment of the invention.
FIG. 10 is a rear view of a cabin showing a still further embodiment of the invention in which a plurality of air feed means.
FIG. 11 is a side sectional side view showing an embodiment in which the invention is adopted in a seating mat.

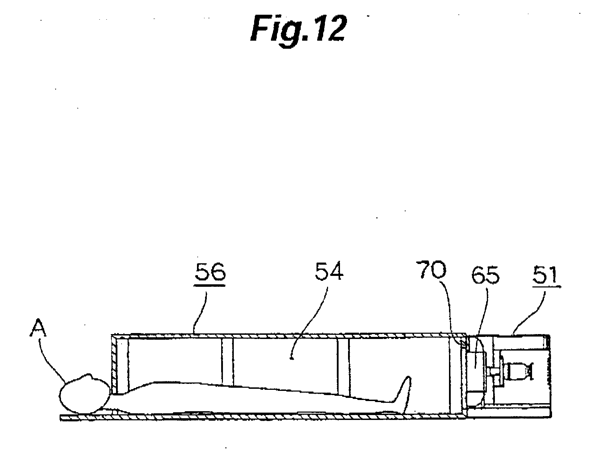

FIG. 12 is a sectional view showing a sleeping bag of a conventional example of the invention, as disclosed in Patent Document 1.

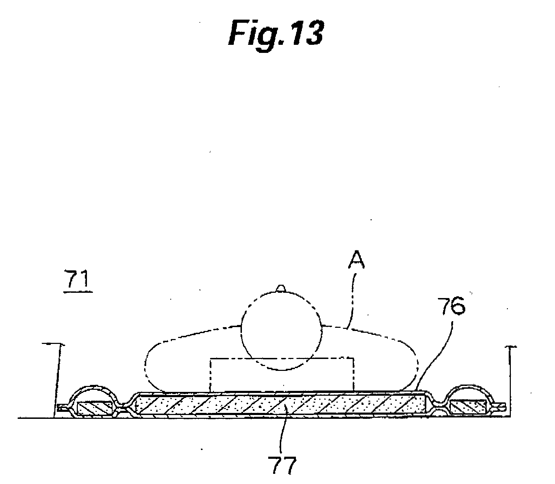

FIG. 13 is a sectional view of an air circulation type mat showing another conventional example of the invention, as disclosed in Patent Document 2.

### Description of Reference Numerals and Signs

- 1:: VEHICLE-MOUNTED TEMPERATURE CONTROL DEVICE
- 2:: REFRIGERATION UNIT
- 3:: DRIVER'S SEAT
- 4:: REAR CABIN
- 4a:: VEHICLE BODY BOTTOM PLATE
- 5:: BATTERY
- 6:: SLEEPING MAT
- 7:: OUTER PLATE
- 7a:: BOTTOM PLATE
- 7b:: SUCTION OPENING
- 7c:: EXHAUST PORT
- 8:: HEAT-INSULATING WALL
- 8a:: HEAT-INSULATING PARTITION WALL
- 8b:: HEAT-INSULATING SIDE WALL
- 9:: MOUNT
- 10:: MACHINE CHAMBER
- 11:: REFRIGERATION CYCLE
- 12:: COMPRESSOR
- 13:: CONDENSER
- 15:: EVAPORATOR
- 16:: RADIATION FAN
- 17:: FOUR-WAY VALVE
- 18:: FILTER
- 19:: TEMPERATURE-CONTROLLED CHAMBER
- 20:: BLOWER FAN
- 22:: GUTTER PORTION
- 23:: RETURN AIR TRUNK
- 24:: BLOWOFF AIR TRUNK
- 25, 25':: HEAT-INSULATING CURTAIN
- 26:: EXTENSION DUCT
- 27:: TEMPERATURE SENSOR
- 28:: ELECTRICAL COMPONENT HOUSING PORTION
- 29:: CONTROL PANEL
- 30:: EXHAUST DUCT
- 31:: DAMPER
- 32:: SHIELDING CURTAIN
- 33:: LOUVER
- 34:: SECOND DUCT
- 35, 42:: RETURN DUCT
- 36:: SWITCHING DAMPER
- 37:: SEATING PORTION
- 38:: SEATING MAT
- 39:: THROUGH HOLE
- 40:: VENTILATING FLUE
- 41:: BRANCHING AIR TRUNK

## Claims

1. A vehicle including a driver's seat (3), a napping cabin (4) provided behind the driver's seat (3) and a temperature control device (1), wherein
the temperature control device (1) comprises:
a refrigeration unit (2) in which a compressor(12), a condenser (13), and an evaporator (15) powered from a battery (5) are annularly connected;
a temperature controlled chamber (19) formed from a heat-insulating wall body and having a blow-off air trunk (24), a return air trunk (23), a circulation fan (20) and the evaporator (15) of the refrigeration unit (2) housed therein; and
a machine chamber (10) provided therein with the compressor (12), the condenser (13) and a radiation fan (16) for cooling the compressor and the condenser;
wherein the temperature control device (1) is attached to the inside of the napping cabin (4) for blowing cool air or warm air generated by means of the evaporator (15) to either the driver's seat (3) or the inside of the napping cabin (4) or both, to control temperature;
means (7c) for discharging to the outside of the vehicle the exhaust air generated during the driving of the compressor (12);
air feed ducts (26, 34) connected to the blowoff air trunk (24) and opened respectively to the cabin (4) and to the driver's seat (3);
a return duct (35) connected to the return air trunk (23) and provided near the outer surface of at least one of a seating portion of the driver's seat (3), a seating mat (38) detachably provided at the seating portion, and a sleeping mat (6) for napping provided in the napping cabine, to which the other end of the air feed duct (26) extends, and whose outer surface is improved, in use, so as to obtain ventilation from the air feed duct (26);.
such that cool air or warm air blown off from the air feed ducts (26, 34) to the cabin (4) and the driver's seat (3) is sucked by the return duct (35) through the surface of at least one of the seating portion, the seating mat and the sleeping mat and returns to the return air trunk (23) through the return duct (35).

2. A vehicle according to Claim 1, whereon one of the air feed ducts is an extension duct (26) capable of being supplied to the driver's seat.

3. A vehicle according to Claim 1, wherein one of the air feed ducts (26) is provided so as to extend to a space on the ceiling portion of the cabin, and a wind direction controller (33) is provided at the end of the air feed duct.

4. A vehicle according to Claim 3, wherein the wind direction controller (33) is controllable by a position detecting means for a human being.

5. A vehicle according to Claim 1, wherein a damper (36) arranged to switch flow direction is arranged at a branching portion between the air feed ducts (26, 34).

6. A vehicle according to Claim 1, wherein the refrigeration unit(2) is attached to the inside of the napping cabin (4), is covered with a partition and is demarcated from the napping cabin.

7. A vehicle according to Claim 1, wherein the space between the driver's seat (3) and the napping cabin(4) is demarcated by a partition.

8. A vehicle according to Claim 6 or Claim 7, wherein the partition is formed nom a curtain (32) having heat insulation performance or sound insulation performance, or both performances.

## Patentansprüche

1. Fahrzeug, das einen Fahrersitz (3), eine Schlafkabine (4), die hinter dem Fahrersitz (3) bereitgestellt wird, und eine Temperaturregeleinrichtung (1) umfasst, wobei
die Temperaturregeleinrichtung (1) Folgendes umfasst:
eine Kühleinheit (2), in der ein Verdichter (12), ein Kondensator (13) und ein Verdampfer (15), gespeist von einer Batterie (5), ringförmig verbunden sind,
eine temperaturgeregelte Kammer (19), die aus einem wärmedämmenden Wandgehäuse geformt ist und einen Ausblase-Luftschacht (24), einen Rücklauf-Luftschacht (23), ein Umwälzungsgebläse (20) und den Verdampfer (15) der Kühleinheit (2) hat, die in derselben untergebracht sind, und
eine Maschinenkammer (10), die mit dem Verdichter (12), dem Kondensator (13) und einem Abstrahlungsgebläse (16) zum Kühlen des Verdichters und des Kondensators in derselben versehen ist,
wobei die Temperaturregeleinrichtung (1) an der Innenseite der Schlafkabine (4) befestigt ist, um mit Hilfe des Verdampfers (15) erzeugte kühle Luft oder warme Luft entweder zu dem Fahrersitz (3) oder der Innenseite der Schlafkabine (4) oder beiden zu blasen, um die Temperatur zu regeln,
Mittel (7c) zum Abgeben der während des Betreibens des Verdichters (12) erzeugten Abluft zur Außenseite des Fahrzeugs,
Luftzufuhrleitungen (26, 34), die mit dem Ausblase-Luftschacht (24) verbunden und jeweils zu der Schlafkabine (4) beziehungsweise zu dem Fahrersitz (3) geöffnet sind,
eine Rücklaufleitung (35), die mit dem Rücklauf-Luftschacht (23) verbunden ist und nahe der Außenfläche von wenigstens einem von einem Sitzabschnitt des Fahrersitzes (3), einer abnehmbar an dem Sitzabschnitt bereitgestellten Sitzmatte (38) und einer zum Schlafen in der Schlafkabine bereitgestellten Schlafmatte (6) bereitgestellt wird, bis zu der sich das andere Ende der Luftzufuhrleitung (26) erstreckt und deren Außenfläche bei Anwendung verbessert ist, um so eine Lüftung von der Luftzufuhrleitung (26) zu erlangen,
derart, dass die von den Luftzufuhrleitungen (26, 34) zu der Schlafkabine (4) und dem Fahrersitz (3) ausgeblasene kühle Luft oder warme Luft durch die Rücklaufleitung (35) durch die Oberfläche von wenigstens einem von dem Sitzabschnitt, der Sitzmatte und der Schlafmatte gesaugt wird und durch die Rücklaufleitung (35) zu dem Rücklauf-Luftschacht (23) zurückläuft.

2. Fahrzeug nach Anspruch 1, wobei eine der Luftzufuhrleitungen eine Verlängerungsleitung (26) ist, die dazu in der Lage ist, zu dem Fahrersitz geführt zu werden.

3. Fahrzeug nach Anspruch 1, wobei eine der Luftzufuhrleitungen (26) so bereitgestellt wird, dass sie sich bis zu einem Raum an dem Deckenabschnitt der Kabine erstreckt, und eine Windrichtungsregeleinrichtung (33) an dem Ende der Luftzufuhrleitung bereitgestellt wird.

4. Fahrzeug nach Anspruch 3, wobei die Windrichtungsregeleinrichtung (33) durch ein Positionserkennungsmittel für ein menschliches Wesen gesteuert werden kann.

5. Fahrzeug nach Anspruch 1, wobei ein Dämpfer (36), der dafür angeordnet ist, die Strömungsrichtung umzuschalten, an einem Abzweigungsabschnitt zwischen den Luftzufuhrleitungen (26, 34) angeordnet ist.

6. Fahrzeug nach Anspruch 1, wobei die Kühleinheit (2) an der Innenseite der Schlafkabine (4) angeordnet ist, mit einer Trennwand abgedeckt ist und von der Schlafkabine abgegrenzt ist.

7. Fahrzeug nach Anspruch 1, wobei der Raum zwischen dem Fahrersitz (3) und der Schlafkabine (4) durch eine Trennwand abgegrenzt ist.

8. Fahrzeug nach Anspruch 6 oder 7, wobei die Trennwand aus einem Vorhang (32) geformt ist, der eine Wärmedämmungsfunktion oder eine Schalldämmungsfunktion oder beide Funktionen aufweist.

## Revendications

1. Véhicule, englobant un siège de conducteur (3), une cabine-couchette (4) agencée derrière le siège du conducteur (3) et un dispositif de régulation de la température (1), dans lequel :
le dispositif de régulation de la température (1) comprend :
une unité de réfrigération (2), dans laquelle un compresseur (12), un condenseur (13) et un évaporateur (15) entraînés par une batterie (5) sont connectés de manière annulaire ;
une chambre à régulation de la température (19), formée à partir d'un corps de paroi à isolation thermique et comportant un tronc d'air de purge (24), un tronc d'air de retour (23), un ventilateur de circulation (20) et l'évaporateur (15) de l'unité de réfrigération (2) y étant logés ; et
une chambre de machine (10) qui y est agencée avec le compresseur (12), le condenseur (13) et un ventilateur de rayonnement (16) pour refroidir le compresseur et le condenseur ;
dans lequel le dispositif de régulation de la température (1) est fixé sur l'intérieur de la cabine-couchette (4) pour souffler de l'air froid ou de l'air chaud produit par l'intermédiaire de l'évaporateur (15) vers le siège du conducteur (3) ou vers l'intérieur de la cabine-couchette (4), ou vers les deux, afin d'assurer la régulation de la température ;
un moyen (7c) pour décharger vers l'extérieur du véhicule l'air d'échappement produit au cours de l'entrainement du compresseur (12) ;
des conduites d'alimentation d'air (26, 34), connectées au tronc d'air de purge (24) et ouvertes respectivement vers la cabine (4) et vers le siège du conducteur (3) ;
une conduite de retour (35), connectée au tronc d'air de retour (23) et agencée près de la surface externe d'au moins un élément, une partie d'assise du siège du conducteur (3), un matelas d'assise (38), agencé de manière détachable au niveau de la partie d'assise, ou un matelas-couchette (6) agencé dans la cabine-couchette, vers laquelle s'étend l'autre extrémité de la conduite d'alimentation d'air (26) et dont la surface externe est améliorée en service de sorte à entraîner une ventilation à partir de la conduite d'alimentation d'air (26) ;
de sorte que l'air froid ou l'air chaud soufflé à partir des conduites d'alimentation d'air (26, 34) vers la cabine (4) et le siège du conducteur (3) est aspiré par la conduite de retour (35) à travers la surface d'au moins un élément, la partie d'assise, le matelas d'assise ou le matelas-couchette, et retourne vers le tronc d'air de retour (23) à travers la conduite de retour (35).

2. Véhicule selon la revendication 1, dans lequel une des conduites d'alimentation d'air est une conduite d'extension (26) pouvant être étendue vers le siège du conducteur.

3. Véhicule selon la revendication 1, dans lequel une des conduites d'alimentation d'air (26) est agencée de sorte à s'étendre vers un espace sur la partie de plafond de la cabine, un moyen de régulation de la direction du vent (33) étant agencé au niveau de l'extrémité de la conduite d'alimentation d'air.

4. Véhicule selon la revendication 3, dans lequel le moyen de régulation de la direction du vent (33) peut être contrôlé par un moyen de détection de la position d'un être humain.

5. Véhicule selon la revendication 1, dans lequel un amortisseur (36), configuré de sorte à commuter la direction d'écoulement est agencé au niveau d'une partie de dérivation entre les conduites d'alimentation d'air (26, 34).

6. Véhicule selon la revendication 1, dans lequel l'unité de réfrigération (2) est fixée sur l'intérieur de la cabine-couchette (4), est recouverte d'une cloison et est démarquée par rapport à la cabine-couchette.

7. Véhicule selon la revendication 1, dans lequel l'espace entre le siège du conducteur (3) et la cabine-couchette (4) est démarquée par une cloison.

8. Véhicule selon les revendications 6 ou 7, dans lequel la cloison est formée à partir d'un rideau (32) présentant des performances d'isolation thermique ou des performances d'isolation acoustique, ou ces deux types de performances.
